# EUROPEAN PATENT SPECIFICATION

(11) **EP 4 207 002 B1**
(45) Date of publication and mention of the grant of the patent: **13.05.2026**
(21) Application number: 22210717.9
(22) Date of filing: 01.12.2022
(51) Int. Cl.: G06N 5/022, G06N 20/00, G06N 5/04, G06F 16/9032, G05B 19/042

(54) **KNOWLEDGE DRIVEN ARTIFICIAL INTELLIGENCE ENGINE FOR ENGINEERING AUTOMATION**
WISSENSGESTEUERTE MASCHINE DER KÜNSTLICHEN INTELLIGENZ FÜR DIE TECHNISCHE AUTOMATISIERUNG
MOTEUR D'INTELLIGENCE ARTIFICIELLE COMMANDÉ PAR DES CONNAISSANCES POUR AUTOMATISATION D'INGÉNIERIE

(30) Priority: 31.12.2021 US 202163295625 P; 28.04.2022 US 202217731561
(43) Date of publication of application: 05.07.2023
(73) Proprietor: Schneider Electric Systems USA, Inc., Foxborough, MA 02035 (US)
(72) Inventor: Gondhi, Dinesh, 500085 Hydernagar Medchal (IN); Sinha, Bhaskar, 500019 Hyderabad (IN); Patil, Ashish Bhaskarrao, 411045 Pune (IN); Mahendran, Niranjana, 600040 Chennai (IN); Namburu, Kalyana Srinivas, 500075 Hyderabad (IN); Gavande, Vinod Krushna, 421201 Dombivli-East (IN)
(74) Representative: Manitz Finsterwald Patent- und Rechtsanwaltspartnerschaft mbB

(56) References cited:
- WO-A1-2019/164503

## Description

### RELATED APPLICATIONS

This application claims priority to U.S. Patent Application Serial No. 63/295,625 filed December 31, 2021.

### TECHNICAL FIELD

The present disclosure relates to engineering automation, and more particularly, to knowledge driven artificial intelligence engine for engineering automation for industrial control and design applications.

### BACKGROUND

The design of specifications for control applications, human machine interfaces (HMIs), and cabinet engineering for a particular process are performed manually. The effort utilizes significant time and resources to understand characteristics of the process from the overall design inputs and requirements. The overall design inputs can include, for example, a front-end engineering and design (FEED) that can include, e.g., piping and instrumentation diagrams (P&IDs) and a database of component identifiers (also referred to as TAGs)). When developing a new design, engineers rely on skill and can use significant amounts of time to determine if a new solution should be created of if a specific requirement has already been addressed by a previous team that can be leveraged by reusing associated existing artifacts.

When this problem is approached by applying a strictly rules driven approach, there are constraints that limit use and a lack of scalability. The process still requires a high level of engineering skill and significant time resources to design the rules for every new project and each type of project.

While conventional methods and systems for monitoring dangerous conditions in an operation unit have generally been considered satisfactory for their intended purpose, there remains a need for improvements. Related technology is known from WO 2019/164503 A1.

### SUMMARY

The present invention is set out in the appended claims. The purpose and advantages of the below described illustrated embodiments will be set forth in and apparent from the description that follows. Additional advantages of the illustrated embodiments will be realized and attained by the devices, systems and methods particularly pointed out in the written description and claims hereof, as well as from the appended drawings. To achieve these and other advantages and in accordance with the purpose of the illustrated embodiments, in one aspect, disclosed is a method of automating engineering design. The method includes querying a knowledge base for a template to map with new control loop data of a new control loop that was identified in new digitized design data for a new engineering project, the query including the new control loop data. The knowledge base is trained to map past control loop data of past control loops that were identified in past digitized design data from one or more past engineering projects to respective templates based on past instantiation of the respective templates with the past control loops by the one or more past engineering projects. The method further includes receiving a selected template in response to the query, wherein the selected template is selected based on its mapping with past control loop data that matches the new control loop data. Configuration data, including an instantiation of the selected template with the new control loop data, is provided for implementation of the new control loop in an engineering system.

In one or more embodiments, the method can further include instantiating the new control loop data with the selected template.

In one or more embodiments, the new control loop data and past control loop data can be standardized and/or normalized.

The methode further includes collecting, before providing to the knowledge base for training, pairings of past templates and past control loops having identifiers and past control loop data as used for respective past instantiations by the respective past engineering projects, submitting the pairings for a conflict review performed manually and/or automatically, receiving review data based on the conflict review, and updating the collection as a function of the conflict review data, wherein the knowledge base is created and/or trained using the collection.

The conflict review includes identifying a conflict in which first and second control loop data for two different pairings are the same and are paired respectively with different templates, reviewing the digitized design data to identify an additional attribute of the respective first and second control loops that is different for the first control loop relative to the second control loop, and including in the review data a new feature to be added to the control loop data in the collection for the first and second control loops that corresponds to the additional attribute so that the first and second control loops have different corresponding control loop data.

In one or more embodiments, the method can further include adding the additional attribute to the control loop data of at least one of the first and second control loops.

In one or more embodiments, the method can further include submitting a mapping of the selected template and the new control loop data for engineering review, receiving review data based on the engineering review, and updating the knowledge base as a function of the review data.

In one or more embodiments, the method can further include identifying the past control loop data in past digitized design data from a past engineering project and pairing the past control loop data to a past template that was instantiated by the past engineering project using a control loop that corresponds to the past control loop data.

In one or more embodiments, the method can further include identifying the new control loop data in the new digitized design data.

In one or more embodiments, machine learning can be used for training the knowledge base and for responding to queries submitted to the knowledge base.

In one or more embodiments, the past and new control loop data can include control loop type, one or more tags, and/or attributes of the one or more tags, wherein the attributes of the one or more tags can include system type, signal type, signal count, signal level, alarms, and/or signal and/or equipment description.

In one or more embodiments, each mapping in the knowledge base can have an associated confidence score, and updating the knowledge base can include increasing the confidence score when the mapping was approved by the engineering review, and decreasing the confidence score when the mapping was disapproved and/or a modification to or replacement of the selected template was suggested by the engineering review.

In accordance with further aspect of the disclosure, an automated engineering system is provided that includes a memory configured to store instructions and a processor in communication with the memory, wherein the processor upon execution of the instructions is configured to perform the disclosed method.

In accordance with still further aspects of the disclosure a non-transitory computer readable storage medium and one or more computer programs embedded therein is provided, which when executed by a computer system, cause the computer system to perform the disclosed method.

These and other features of the systems and methods of the subject disclosure will become more readily apparent to those skilled in the art from the following detailed description of the preferred embodiments taken in conjunction with the drawings.

### BRIEF DESCRIPTION OF THE DRAWINGS

A more detailed description of the disclosure, briefly summarized above, may be had by reference to various embodiments, some of which are illustrated in the appended drawings.
FIG. 1 is a block, flow diagram illustrating an example artificial intelligence (AI)-based design system for AI based automated engineering project design, in accordance with embodiments of the invention;
FIG. 2, is a schematic diagram illustrating an example template for a control loop, in accordance with embodiments of the invention;
FIG. 3, is a schematic diagram illustrating an example template in an uninstantiated state and in an instantiated state, in accordance with embodiments of the invention;
FIG. 4 is a block, flow diagram illustrating an example knowledge base builder/trainer engine of the Al- based design system, in accordance with embodiments of the invention;
FIG. 5, illustrates example entries for pairings stored in a collection of pairings of a knowledge base builder/trainer engine of the Al-based design system, in accordance with embodiments of the invention;
FIG. 6, illustrates example entries for pairings stored in a collection of pairings of a knowledge base builder/trainer engine of the Al-based design system when a conflict is detected before and after resolution is performed, in accordance with embodiments of the invention;
FIG. 7, is a block, flow diagram illustrating example machine learning aspects of training knowledge base builder/trainer engine, in accordance with embodiments of the invention;
FIG. 8, is a block, flow diagram illustrating application of a knowledge base in the Al-based design system for making predictions, in accordance with embodiments of the invention;
FIG. 9, is a flowchart illustrating an example method of querying a knowledge base of the Al-based design system, in accordance with embodiments of the invention;
FIG. 10 is a flowchart illustrating an example method of training a knowledge base of the Al-based design system, in accordance with embodiments of the invention; and
FIG. 11 is a block diagram of an example computer system used for implementation of the Al-based design system, in accordance with embodiments of the invention.

Identical reference numerals have been used, where possible, to designate identical elements that are common to the figures. However, elements disclosed in one embodiment may be beneficially utilized on other embodiments without specific recitation.

### DETAILED DESCRIPTION

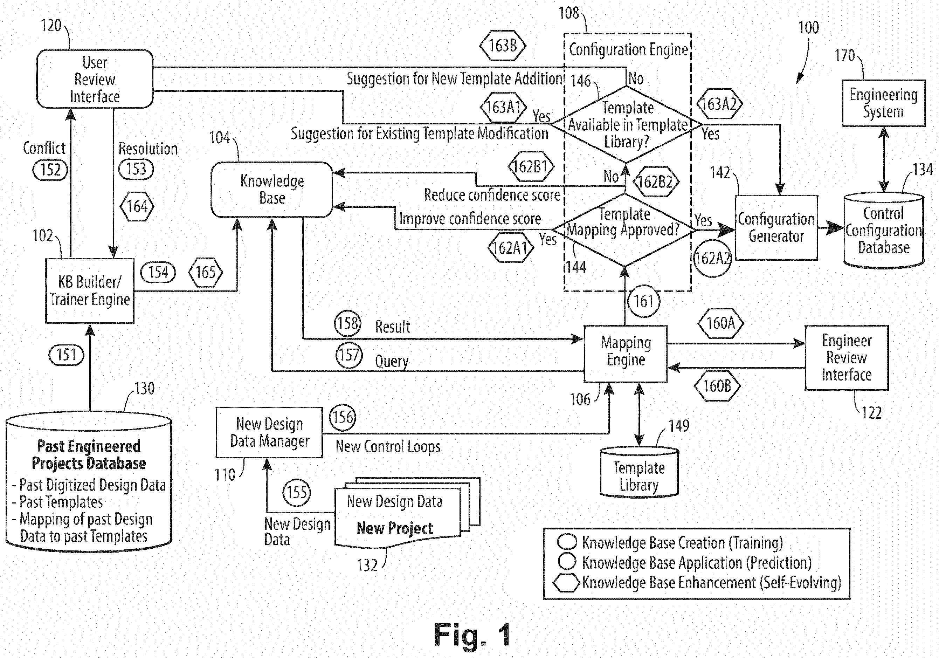

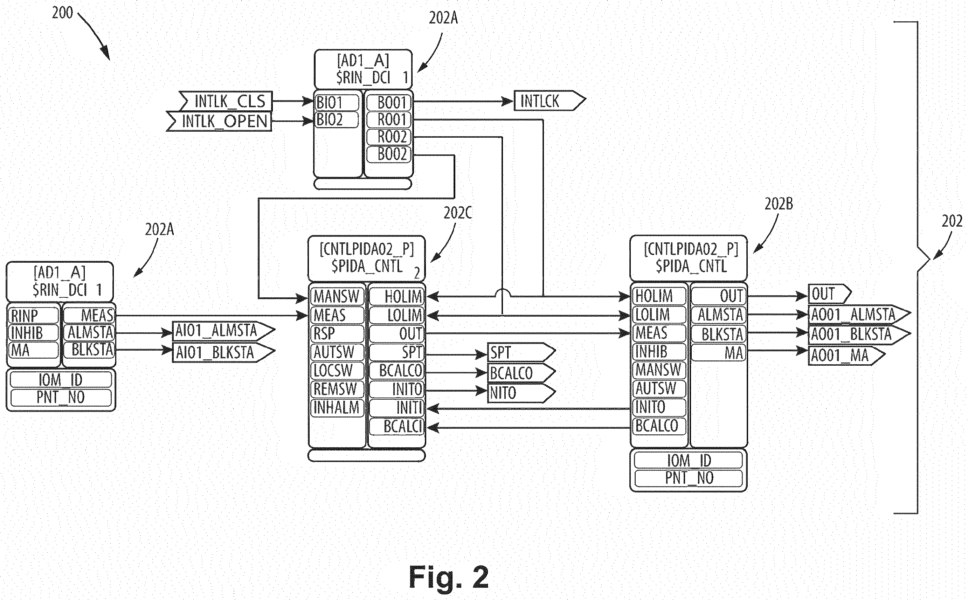

With reference now to the drawings, for purposes of explanation and illustration, and not limitation, a block diagram of an exemplary embodiment of a design system in accordance with the disclosure is shown in FIG. 1, wherein the design system is designated generally by reference character 100. Methods associated with monitoring one or more operation units with design system 100 in accordance with the disclosure, or aspects thereof, are provided in Figs. 2-11, as will be described.

It is noted that FIGS. 1, 4, and 7-10 show flow diagrams and flowcharts. The flows in FIGS. 1, 4, and 7-10 demonstrate implementation of various exemplary embodiments. It is noted that the order of operations shown in FIGS. 1, 4, and 7-10 is not required, so in principle, the various operations may be performed out of the illustrated order. Also certain operations may be skipped, different operations may be added or substituted, some operations may be performed in parallel instead of strictly sequentially, or selected operations or groups of operations may be performed in a separate application following the embodiments described herein.

Language that refers to the transfer of information is not meant to be limiting. For example, the term "receive" as used herein refers to obtaining, getting, accessing, retrieving, reading, or getting a transmission. Use of any of these terms is not meant to exclude the other terms. Data that is transferred to or from a module can be transferred by a transmission to or from the module, or can include the data in a location that can be accessed by the module or is provided in a manner to be accessible to another module.

Design system 100 is an artificial intelligence (Al)-based design system configured to automate design of engineering workflows, such as control applications, human-machine interface (HMI) design and cabinet design. Design system 100 includes a knowledge base (KB) builder/trainer engine 102, a KB 104, a mapping engine 106, a configuration engine 108, a new design data manager 110, a user review interface 120, and an engineer review interface 122. Design system 100 receives input data from a past engineered projects database 130 which is used to build KB 104.

Design system 100 further receives review data via a review interface 120 and/or engineer review interface 122. The review data can be requested and/or generated automatically or manually. The review data is used to update the KB 104, such as for updating mappings of templates, updating control loop data, updating confidence scores associated with mappings between templates and control loops, and/or adding new templates that can be used by KB 104 for mappings.

A control loop performs some sub-process in the plant process and may be either a closed or an open control loop. Most control loops involve several devices working together, including sensors, actuators, controllers, and the like. There are generally two types of control loops: simple control loops, and complex control loops. Simple control loops have an input, an output, and a controller, while complex control loops are made of several simple control loops.

Design system 100 further receives new project data 132 with a request to automatically generate configuration data for an engineering workflow. The configuration data is output to control configuration database 134 where it can be applied for designing an engineering system 170.

With reference to architecture of design system 100 and its related storage, each of its modules, including KB builder/trainer engine 102, KB 104, mapping engine 106, configuration engine 108, new design data manager 110, user review interface 120, and engineer review interface 122, is implemented using a physical or virtual computing device having a central processing unit (CPU), random access memory (RAM), and a storage medium, which can be connected through buses. Programmable instructions can be stored in the storage medium and executed by the CPU to cause the CPU to perform operations described herein. Whether implemented as physical or virtual device(s), the modules of design system 100 use one or more local or remote hardware processing devices that execute software instructions, which enables performance of the disclosed functions.

One or more of KB builder/trainer engine 102, KB 104, mapping engine 106, configuration engine 108, new design data manager 110, user review interface 120, and engineer review interface 122 can be integrated with each other, can be implemented by discrete devices, or can share one or more hardware or software components. Functionality can be shared or divided amongst mapping engine 106, configuration engine 108, new design data manager 110, user review interface 120, and engineer review interface 122 in a variety of ways.

Communication between KB builder/trainer engine 102, KB 104, mapping engine 106, configuration engine 108, new design data manager 110, user review interface 120, and engineer review interface 122 can use wired or wireless communication, including one or more buses, wireless links, and/or computer networks (such as an intranet, a local area network (LAN), and/or a wide area network (WAN)).

In the example shown, one instance is shown for each of KB builder/trainer engine 102, KB 104, mapping engine 106, configuration engine 108, new design data manager 110, user review interface 120, and engineer review interface 122, however one skilled in the art will recognize that the number of instances of these respective modules is not limited to a particular number.

KB 104 and storage components within respective modules KB builder/trainer engine 102, mapping engine 106, configuration engine 108, new design data manager 110, user review interface 120, and engineer review interface 122 can store data structures in volatile or non-volatile memory or on persistent storage (such as a file system). The storage component(s) of each of the modules KB builder/trainer engine 102, KB 104, mapping engine 106, configuration engine 108, new design data manager 110, user review interface 120, and engineer review interface 122 can be integrated with or accessible to the corresponding module and other modules of design system 100.

The functions of the modules KB builder/trainer engine 102, KB 104, mapping engine 106, configuration engine 108, new design data manager 110, user review interface 120, and engineer review interface 122 of design system 100 are now described together with the flow of design system 100.

The term knowledge base can refer to one or more ways of collecting, organizing, retrieving, and sharing knowledge, which can include, for example, application of rules, data mining, modelling, artificial intelligence, machine learning, or the equivalent.

Starting with flows 151-154, building or training of KB 104 is described. Past engineered projects (PEP) database 130 stores and submits digitized design data that was obtained from past engineered projects. The past engineered projects can be provided as documents in formats such as pdf, png, xlsx etc., including pictorial and/or textual data. Pictorial and textual data can include, for example, diagrams, charts, alphanumeric data, photographs, etc. The documents can include, for example, piping and instrumentation diagrams (P&IDs), process flow diagrams (PFDs), cause and effect (C&E), a tag database etc. The digitized design data obtained from the design data of past engineered projects is referred to as past digitized design data. The past engineered projects include instantiated template(s), wherein the digitized design data for the past engineered projects was used to instantiate one or more templates (referred to as past templates). Identification of the past digitized design data and the past templates with which it was instantiated are paired together and used to build or train KB 104.

With additional reference to FIG. 2, an example template 200 is shown. A template is a software program or logic used by a distributed control system (DCS) system to perform specific functions, such as process control, data acquisition, and alarming. This program is executed by a controller (a DCS hardware component) that can be disposed, for example, in an industrial plant. This program can be represented by a group of interconnected function blocks 202, such as one or more input blocks 202A, one or more control and/or calculation blocks 202C, and one or more output blocks 202B. The input block(s) 202A are configured to acquire data (e.g., temperature, pressure, flow, level, etc. from a field device), and the output block(s) 202B are configured to output a control signal to control a physical entity (e.g., to control steam inflow to a vessel by manipulating a valve position, to control electrical flow by manipulating a switch, etc.). The control block(s) 202C can include, for example, a proportional-integral-derivative (PID) control block, logic, mathematical operations, etc. The control and/or calculation block(s) 202C are configured to determine the control signal for manipulating a physical entity in order to control a process variable (e.g., temperature, pressure, flow, level, etc.,) to a desired value or within a desired range by.

With returned reference to FIG. 1, an instantiated template (whether past template or new template) is an instantiation of the template in which selected digitized design data was inserted in fields of the template. The instantiation of past templates with past digitized design data can be performed manually, as automatic instantiation of templates with digitized design data would be unavailable for past engineering projects without the systems provided by the disclosed features of KB builder/trainer engine 102, new design data manager 110, and mapping engine 106. Digitization of past engineering projects for providing the past digitized design data is disclosed by U.S. Patent Nos. 10671894 and 10635945.

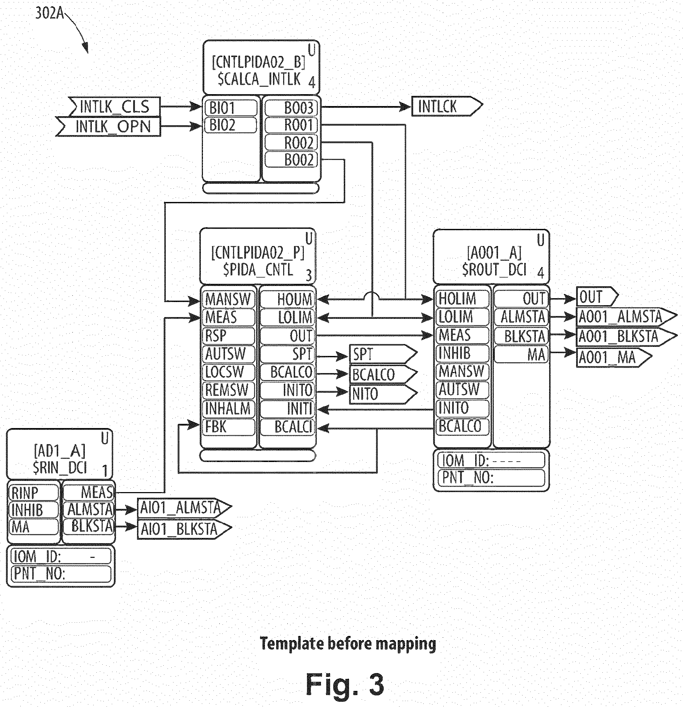

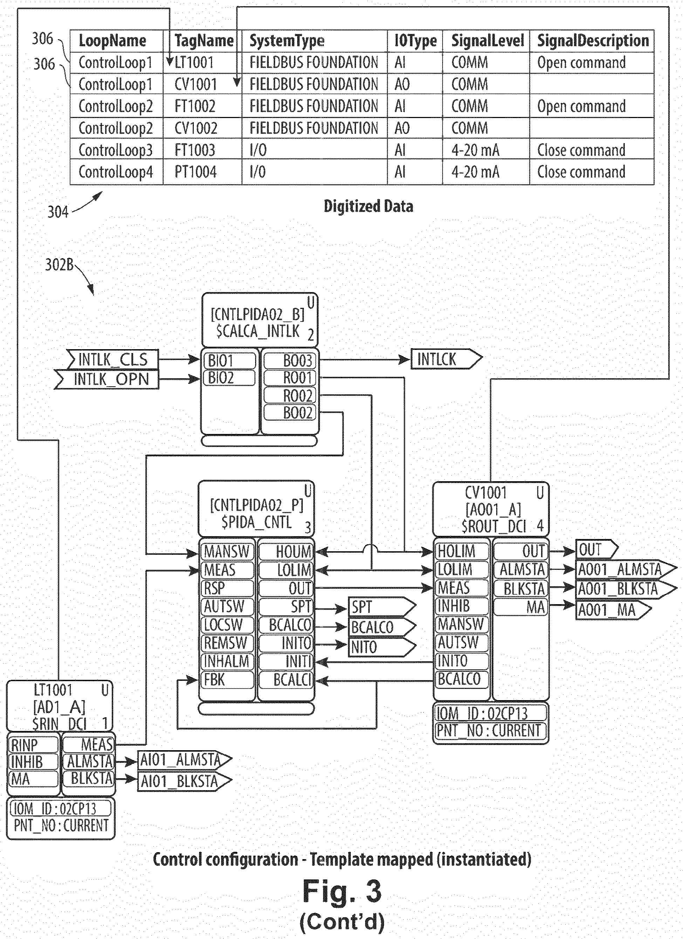

With additional reference to FIG. 3, shown are an example sample 304 of digitized data, an example instance 302A of a template in an uninstantiated state, and an example instance 302B of the template in an instantiated state. The sample 304 shows digitized data entries for four control loops, with an entry corresponding to each tag included in each of the loops. The digitized entries include control loop data, including control loop names to identify the respective control loops, tag names to identify the corresponding tag, system type (e.g., fieldbus foundation or I/O), input/out (I/O) type, signal level, and/or signal description. Additional, less, or different control loop data can be included with the stored digitized data. All entries of digitized data that have the name ControlLoop1 are used for instantiating the template, resulting in the instantiated instance 302B. Namely, the entry for tag name LT1001 was used to instantiate an input block and the entry for tag name CV1001 was used to instantiate an output block.

With returned reference to FIG. 1, at flow 151, past templates instantiated with past digitized design data for a past project, including a pair of identification of the past template (template ID) and identification of the past digitized design data (past digitized design data ID), are provided to KB builder/trainer engine 102. KB builder/trainer engine 102 identifies past control loops in the past digitized design data (referred to as past control loops). Identification of control loops is described in U.S. patent applications having serial numbers 17/442,403, 17/442,423, and 17/442,437. Each past control loop has associated control loop data that describes attributes of the control loop, such as control loop type, one or more tags, and attributes of the tags (e.g., such as system type, signal type, signal count, signal level, alarms, and/or signal and/or equipment description, etc.).

A tag of a control loop is a unique identification name given to a device or an equipment. A control loop extracted from past or new digitized design data includes a logical group of tags performing a specific control operation. For example, an control loop for measuring temperature of a fluid in a vessel and doing a control operation, e.g., controlling a valve to supply the steam as needed to the vessel in order to maintain the temperature of the fluid in the vessel at a certain setpoint can include a first tag named Tag1 for measuring the temperature and a second tag named Tag2 for controlling the operation.

Once a past control loop is identified, a determination can be made regarding which past template the past control loop was used for instantiation. A past control loop can be used to instantiate one or more past templates or multiple control loops can be used to instantiate one past template. Pairings are determined that include the identification (past control loop data ID) and past control loop data associated with each past control loop and identification of each past template (template ID) involved in an instantiation.

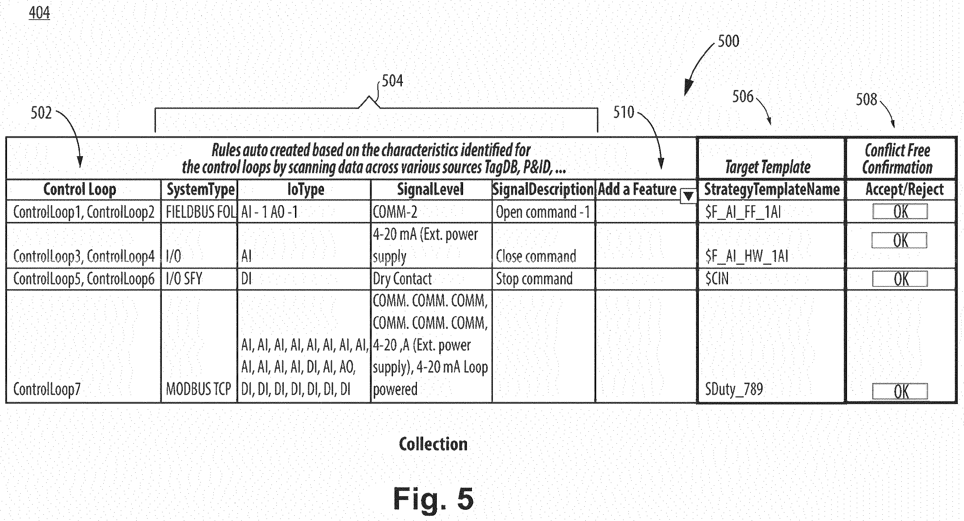

With reference to FIGS. 1 and 5, a number of entries is shown as sample 500 for pairings stored in collection 404 by KB builder/trainer engine 102. Identifiers of past control loops are shown in column 502, corresponding features of control loop data is shown in columns 504, corresponding past template identification is shown in column 506, confirmation regarding whether the entry is conflict free is shown in column 508, and a tool to add a feature to the control loop data is shown in column 510. In the example shown, in a first entry, control loops identified as ControlLoop1 and ControlLoop2 have the same control loop data in corresponding features (as shown in columns 504), are paired with the same template (which is identified in column 506), are confirmed as being conflict free, and do not have any added features. The same is true for the control loop(s) identified in the remaining entries shown.

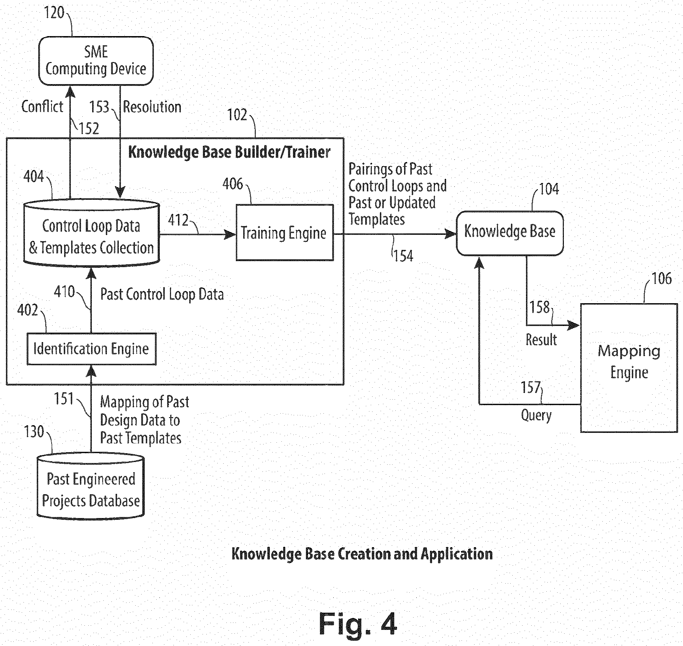

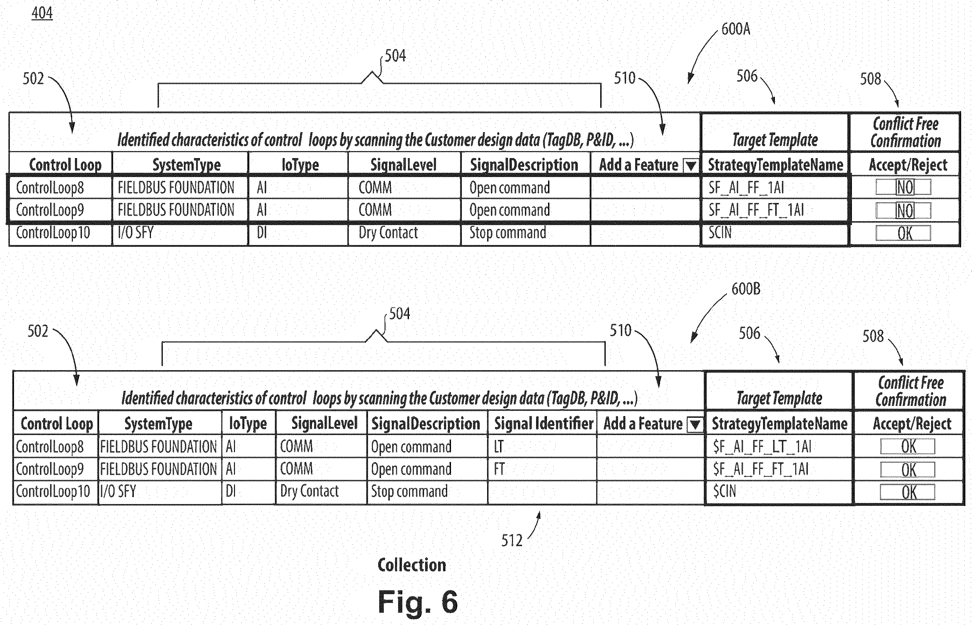

With additional reference to FIG. 4, in one or more embodiments, at flow 152 KB builder/trainer engine 102 submits the pairings stored in entries of collection 404 to review interface 120 for detection and/or resolution of conflicts in the pairings. In one or more embodiments, training engine 406 detects conflicts in entries of collection 404 and submits the conflicts to review interface 120 for manual or automated resolution. The division of functions performed by review interface 120 and training engine 406 is not limited to a specific design, and detection and resolution can be performed by either of these modules. Detection and resolution of conflicts is explained with reference to FIG. 6 and the related description.

In one or more embodiments, review interface 120 can provide an interface to an expert user, such as a subject matter expert (SME). In one or more embodiments, review interface 120 can provide an interface to an automated process for detecting and/or resolving conflicts. Review data including a resolution of a detected conflict is provided (by the SME or automated process) via review interface 120 at flow 153. KB builder/trainer engine 102 receives the resolution and updates collection 404.

With reference to FIGS. 1 and 6, a number of entries is shown as sample 600A for pairings stored in collection 404 by KB builder/trainer engine 102 when a conflict is detected before resolution. The same entries are shown as sample 600B after the detected conflicts have been resolved. In sample 600A, the respective entries for ControlLoop8 and ControlLoop9 have the same control loop data, but are paired with different templates, which established a conflict that has been flagged in column 508. The conflicting entries can optionally be highlighted or otherwise displayed with a graphical indicator of the conflict. During the resolution process the corresponding past digitized design data (or original past design data prior to digitization) was consulted for additional details about the control loops that would differentiate ControlLoop8 and ControlLoop9 that would account for assignment of a different template to these respective control loops.

The consultation (manual or automatic) revealed that ControlLoop8 and ControlLoop9 have different signal identifiers. In sample 600B, it is shown that via activation of the add feature tool at column 510, manual or automatic addition of column 512 was allowed to the columns of control loop data 502. The confirmation that the entries for ControlLoop8 and ControlLoop9 are conflict free was updated.

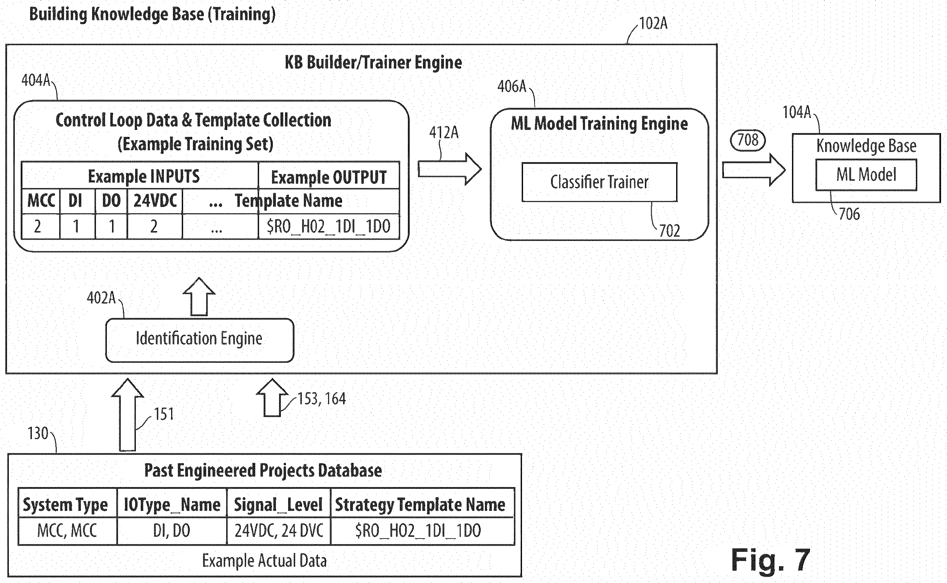

With returned reference to FIG. 1, pairings of identification of past control loops (control loop ID) and the associated past control loop data, with past templates used in the same instantiation are provided to KB 104 at flow 154. Flow 154 can further include adjustments to the pairings, namely based on adjustment to the control loop data used to identify a past control loop in accordance with resolutions received at flow 153 from review interface 120. While flow 154 is descried as including pairings and adjustments to pairings, flow 154 can include any data used to build or train KB 104, such as a classifier trainer 702, as described in greater detail with reference to FIG. 7.

KB builder/trainer engine 102 standardizes and/or normalizes the past control loop data and past templates before providing them to KB 104 (as described with respect to identification engine 402 of KB builder/trainer engine 102 in FIG. 4).

KB 104 is revised by storing mappings for each of the pairings received via flow 154 as well as resolved, new, or updated pairings received via flow 165. New and updated pairs are described in greater detail with respect to the description of flows 163A and 163B. The mappings include the identification and control loop data of the past control loop(s) in the pairing as mapped to the past template identified in the pairing. In addition, each mapping can have an associated confidence score. Upon an initial storing of a pairing in KB 104, e.g., as a mapping, the confidence score can be neutral. Each time a pairing for the same mapping is submitted again to KB 104 at flow 154, the confidence score is increased.

While the pairings received at flow 154 and mappings stored by KB 104 are described as 1:1 mappings with control loop data for one control loop correlated to one template in the pairings and mappings, one skilled in the art will recognize that control loop data for respective multiple control loops can correspond to one template, control loop data for one control loop can correspond to multiple templates, or control loop data for multiple control loops can correspond to multiple templates. Although the other flows may refer to control loop data for one control loop or template ID of one template, it is understood that either of these could be substituted with multiple instances.

Each time a conflict is detected, confidence scores can be updated to reflect the conflict and the resolution. For example, if a mapping with the conflict exists in KB 104, its associated confidence score can be decreased or the mapping can be removed. If a mapping with the revised control loop data (in accordance with the resolution) exists in KB 104, its associated confidence score can be increased.

With reference to FIGS. 1 and 4, KB builder/trainer engine 102 can include an identification engine 402, a collection 404, and a training engine 406. Identification engine 402 receives the past templates with past digitized design data that was used for instantiating the past templates, extracts the past control loops from the past digitized design data, and determines the pairings. The pairings of identifications of past control loops and associated past control loop data with past templates are stored in collection 404 at flow 410. Identification engine 402 can normalize and/or standardize the past control loop data and/or past templates before storing the pairings in collection 404. A transformation process can be applied for converting nonstandard values in the past control loop data into standard or normalized values. For example, a signal type of a tag attribute can be included in the past control loop data as "Al." Identification engine 402 can standardize or normalize the signal type to be "Analogue Input". A similar process is used for templates. Two templates are similar can be automatically recognized, with one of the two templates used as a member of the mapping pair.

Collection 404 is updated based on resolutions by review interface 120. Training engine 406 trains (or builds) KB 104 by providing the pairings (or trained data) from collection 404 at flow 154 with any revisions performed to KB 104 and updating KB 104 by storing a mapping for each pairing provided at flow 154.

With returned reference to FIG. 1, KB 104 uses the pairings to provide an association between control loop data associated with control loops and templates to which the respective control loops were paired and mapped. The control loops can be identified from past digitized design data or new digitized data (based on feedback).

New design data 132 that corresponds to a new engineering product can be submitted at flow 155 to new design data manager 110. New design data 132 can be implemented in an engineering system, such as engineering system 170. Flows 155-161 and flow 162A illustrate application of KB 104 for receiving the new design data and using a prediction about a template for mapping of the new design data in order to generate control configuration data that can be used to design engineering system 170.

New design data 132 is received via flow 155 by design data manager 110 in pictorial and/or textual format. Design data manager 110 digitizes the new design data. Digitization of design data is described by U.S. Patent Nos. 10671894 and 10635945. Design data manager 110 further identifies control loops and corresponding control loop data in the new design data (also referred to as new control loops and new control loop data). Design data manager 110 can further normalize and/or standardize the new control loop data. The method used by design data manager 110 for identifying control loops can be the same or similar to the process used by KB builder/trainer engine 102 for identifying control loops. The identified new control loops are provided via flow 156 to mapping engine 106. The identified new control loop data includes, for example, control loop type and tags belonging to the control loop along with attributes of the tags.

Design data manager 110 provides the new control loops to mapping engine 106. Mapping engine 106 queries KB 104 at flow 157 for templates to use for each new control loop. The query for a new control loop includes the new control loop data for the new control loop. KB 104 receives the query and selects the template that has associated control loop data that matches the control loop data in the query. The matching process is simplified by the normalization and/or standardization of the control loop data in the query and the control loop data stored in KB 104. If KB 104 selects more than one template for the new control loop a first section of tags present in the new control loop data can be mapped to one of the templates and a second section of tags of the new control loop data can be mapped to a different one of the templates. A different section of tags can be mapped to each of the respective different templates. The selected template is provided to mapping engine 106 at flow 158 as a recommendation for pairing with the control loop data. The control loop data of the new control loop can thus be mapped to the selected template.

Once a template is selected for a new control loop, mapping engine 106 maps the selected template with new control loop data of the new control loop and provides the mapping (which identifies the selected template and the new control loop) to configuration engine 108 at flow 161. In one or more embodiments, mapping engine 106 submits at flow 160 the mapping to an engineer review interface 122. In one or more embodiments, engineer review interface 122 can provide an interface to an expert user, such as a project engineer. The project engineer reviews the mapping for appropriateness, e.g., from a practicality, practicability, and/or engineering point of view. The project engineer may provide review data as feedback at flow 160B via engineer review interface 122 that the mapping is disapproved (e.g., for being incorrect or not ideal) or approved. In addition, the review data provided at flow 160B by the project engineer may include a suggestion with a replacement mapping that identifies a replacement template to use instead of the selected template.

If the mapping was disapproved and a replacement template was not suggested, the method continues at flow 161. If the mapping was disapproved and a replacement template was suggested, the identified replacement template is retrieved from template library 149, and the method continues at flow 161. If the replacement template as identified in the review data is not found in template library 149, the method continues at flow 161. If the mapping was approved, the selected template is retrieved from template library 149, and the method continues at flow 161.

At flow 161 the instantiated selected or replacement template are provided to configuration engine 108. Furthermore, in one or more embodiments, the review data and success status of retrieving the selected or replacement template is reported to configuration engine 108. The review data reported can include an indication of a disapproval by the project engineer and whether a replacement template was suggested.

Logic and functions performed by configuration engine 108 are shown at blocks 144 and 146. At block 144, a determination is made whether the mapping suggested by KB 104 at flow 158 was approved. If the mapping was approved, notification of the approval is provided to KB 104 at flow 162A1 with a command to increase the confidence score associated with the mapping. In addition, the mapping and the selected template (if successfully retrieved) are provided to configuration generator 142 at flow 162A2. Configuration generator 142 can instantiate the selected template using the new control loop data.

If the mapping was disapproved, notification of the disapproval is provided to KB 104 at flow 162B1 with a command to decrease the confidence score associated with the mapping and the method continues at block 146, as indicated by flow 162B2.

At block 146, a determination is made whether the selected template or replacement template were available in template library 149. If the selected or replacement template was available in template library 149, at flow 163A2 the selected or replacement template is provided to configuration generator 142 with the new control loop (if not already provided at flow 162A2). Configuration generator 142 can instantiate the selected or replacement template using the new control loop data.

In addition, at flow 163A1, a request is provided to review interface 120 suggesting a modification for mapping the replacement template to the control loop (instead of the selected template), per the suggestion from engineering review interface 122 at flow 160B. If the selected or replacement template is not available in template library 149, at flow 163B, a request is provided to review interface 120 with a suggestion to add a new template to template library 149 as specified via engineering review interface 122 at flow 160B. While identification of the selected or replacement template to be added to template library 149 can be provided with human intervention, communication to review interface 120 can be automated.

At flow 164, review interface 120 provides template IDs of the modified or newly added template and control loop IDs of the control loops having control loop data with which it is to be mapped. At flow 165, KB builder/trainer engine 102 provides instructions to KB 104 to update any mapping it has that includes the control loop ID of the new control loop and template ID of the new or modified template.

Configuration generator 142 can handle updating control configuration database 134 with the mappings to the selected or replacement templates, and can further perform instantiation of the selected or replacement templates using the new control loops in accordance with the mapping. The instantiated templates can be stored in control configuration database 134. A control component of engineering system 170 can be operated using the instantiated templates in control configuration database 134 or can access the mappings in control configuration database and perform the instantiation, which is then utilized for operation of the control component.

As shown, a process of creating, building, and/or training KB 104 includes the process performed at flows 151, 152, 153, and 154. A process for making predictions using KB 104 includes flows 155, 156, 157, 158, 161, and 162A2. A self-evolving process for enhancing KB 104 includes flows 160A, 160B, 162A1, 162B1, 162B2, 163A1, 163A2, 163B, 164, and 165.

With reference to FIG. 7, shown are KB builder/trainer engine 102A, KB 104A, identification engine 402A, collection 404A, and ML model training engine 406A are shown while performing an example process of building or creating KB 104. The description of KB builder/trainer engine 102, KB 104, identification engine 402, collection 404, and training engine 406, including interactions between these components, as described with respect to FIGS. 1 and 4 is applied to builder/trainer engine 102A, KB 104A, identification engine 402A, collection 404A, and ML model training engine 406A, respectively. Thus, the description of model training engine 406 is relevant to ML model training engine 406A, but as its label indicates, ML model training engine 406A shows an embodiment that includes classifier trainer 702 and is specific to training a ML model 706 of KB 104A.

Identification engine 402A of KB builder/trainer engine 102A receives and normalizes inputs received via flows 151, 153, or 164. The inputs to KB 104A can be formatted with a specified shape. Example respective shapes can include batch size, steps, features) and activation function. In an example, the control loop data has a shape Nx15x21 (meaning batch size N, steps 15, features 21) and the template identified by template ID has a shape Nx32 (meaning batch size N, output features 32, and activation function). In an example, the activation function used is softmax (without limitation), which is a mathematical function for converting a vector of numbers into a vector of probabilities which can be applied to a neural network model.

In the example shown, the data provided via flow 151 is provided from past engineered projects database 130. The data included in the past engineered projects database 130 can include, for example, a name of a template paired with a control loop, and control loop data that is particular to the control loop, such as system type, input/output (I/O) types and/or names, signal levels, etc.

Once the inputs are normalized by identification engine 402A, collection 404A updates and aggregates its collection of information about pairings between control loop data and templates, forming a training set. Updates to collection 404A are communicated to ML model training engine 406A as a training set at flow 412A.

An example training set is shown in FIG. 7 that demonstrates how example actual data received via any of flows 151, 153, 164 is aggregated by tallying a number of values of attributes in different features of control data that is paired with an identified template.

ML model training engine 406A includes classifier trainer 702 for using the training set from collection 404A to build and train a classifier, such as random forest classifier, without limitation to a particular classifier. A random forest classifier is trained (e.g., by classifier trainer 702) to have multiple decision trees generated from random samples of data. Each tree provides certain predictions. A prediction output from the classifier is based on voting among the trees. The class with maximum votes is selected to be output as a prediction.

Classifier trainer 702 receives the training set (which can include updates to the training set) via flow 412A. Classifier trainer 702 provides the trained classifier to ML model 706 via flow 708. ML model 706 can use the trained classifier to predict pairings between control data and templates.

In one or more alternative embodiments, KB builder/trainer engine 102 and KB 104A can build and/or use neural networks as an alternative to using classifier trainer 702. The neural networks can be built, for example, using network of long short-term memories (LSTMs).

ML model 706 can be configured to assign a confidence score to the predictions (predicted pairings) that it outputs. Upon an initial training of ML model 706 by the classifier trainer 702, the confidence score associated with predictions can be neutral. As a training set is updated with further instances of pairings between particular control loop data and a particular template, the confidence score for mapping the particular control loop data to the particular template for future predictions can be increased.

While the trained classifier provided at flow 708 can be trained to predict 1:1 mappings of control loop data for one control loop correlated to one template in the pairings and mappings, control loop data for respective multiple control loops to one template, control loop data for one control loop to multiple templates, or control loop data for multiple control loops to multiple templates. Although the other flows described may refer to control loop data for one control loop or template ID of one template, it is understood that either of these could be substituted with multiple instances.

Each time a conflict is detected, the classifier trainer 702 can update the trained classifier to adjust the confidence scores to reflect the conflict and the resolution. For example, upon detection of a conflict associated with a particular pairing of control data to template, the classifier trainer 702 can train the classifier to discontinue mapping the control data to the template or to decrease a confidence score associated with the mapping. Similarly, a mapping for revised control loop data (in accordance with the resolution) can be used to train the trained classifier to increase an associated confidence score.

ML model 706 can continue to be trained by classifier trainer 702 as new design data is received at flow 155 (shown in FIG. 1). Feedback about the prediction result output by ML model 706, such as feedback received via the engineer review process described in connection with FIG. 1 and flows 160A, 160B, 162A1, 162B1, 162B2, 163A1, 163B, and 164, can be used to update the training set provided at flow 412A and the trained classifier provided at flow 708. The confidence score can be adjusted based on feedback, including the feedback received by the engineering review process.

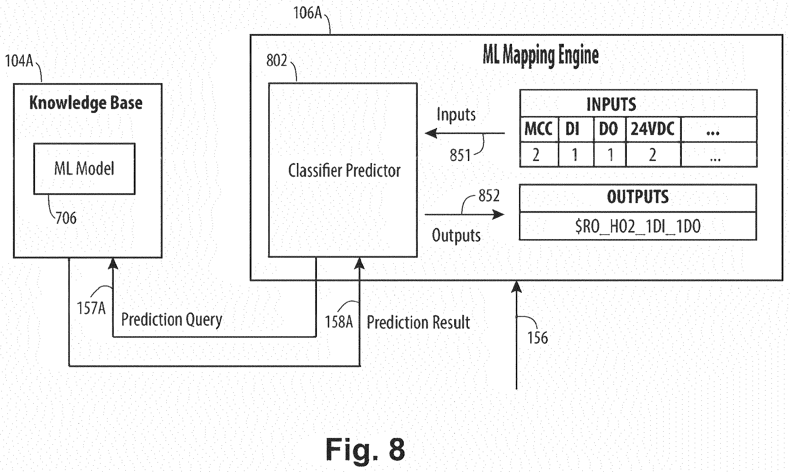

With reference to FIG. 8, KB 104A is shown, once ML model 706 is trained, while performing the process of making a prediction. In one or more embodiments, ML model 706 can apply neural networks, probabilistic algorithms, or other methods for making predictions of which template to pair with the control data. An ML mapping engine 106A having a classifier predictor 802 is shown. The description of mapping engine 106, as described with respect to FIGS. 1 and 4 is applied to ML mapping engine 106A, but as its label indicates, ML mapping engine 106A shows an embodiment that includes classifier predictor 802 and is specific to handling and responding to prediction queries using machine learning.

ML mapping engine 106A receives identified new control loops via flow 156. The identified control loops can be input to classifier predictor as inputs 851. An example input is shown for an identified new control loop. At flow 157A, classifier predictor 802 of ML mapping engine 106A submits a prediction query to ML model 706 based on inputs 851. The prediction query includes multidimensional control loop data for one or more identified new control loops. The dimensional information in the query can be described, for example, by shape.

ML model 706 applies machine learning to predict which template would be paired to the control loop data in the query. For example, when ML model 706 is trained as a random forest classifier, the template predicted is selected based on voting among trees of the random forest classifier. The predicted template is output as a prediction result at flow 158A. The prediction result can also be described by shape.

Classifier predictor outputs identification of the predicted template as outputs 852. These outputs can be provided to configuration engine 108 via flow 161 and/or to engineer review interface 122 via flow 160A, as shown in FIG. 1.

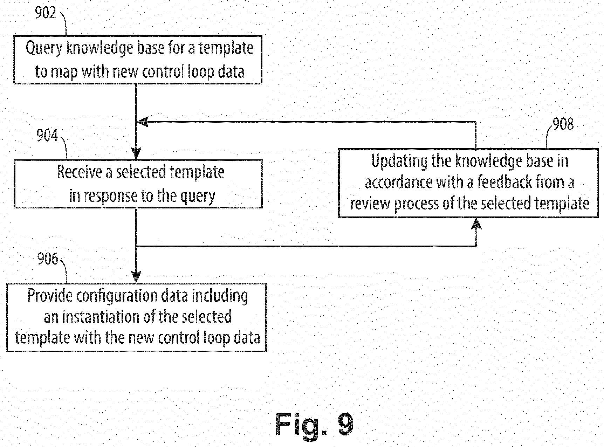

With reference to FIG. 9, an example method of querying a KB is disclosed. At block 902, a KB (e.g., KB 104 in FIG. 1) is queried for a template to map with new control data that was identified in new digitized design data for a new engineering project. The query includes the new control loop data. The KB is trained to map past control loop data of past control loops that were identified in past digitized design data from one or more past engineering projects to respective templates based on past instantiation of the respective templates with the past control loops by the one or more past engineering projects. The new control loop data and the past control loop data can be standardized and normalized.

At block 904, a selected template is received in response to the query. The selected template is selected based on its mapping with past control loop data that matches the new control loop data. At block 906, configuration data is provided that includes an instantiation of the new control loop data with the selected template.

In one or more embodiments, at block 908, the KB is updated in accordance with feedback from a review process of the selected template with respect to the new control loop data in the query. For example, a mapping of the selected template to the new control loop data is submitted for an engineering review and the KB is updated as a function of review data received from a process of the engineering review. For example, a confidence score associated with mappings in the KB that were approved by the engineering process can be increased. A confidence score associated with mappings in the KB that were disapproved by the engineering process and/or in which a modification to or replacement of the selected template was suggested by the engineering review, can be decreased. The mappings that were approved or disapproved are mappings having the same control data as the new control data and the same template as the selected template.

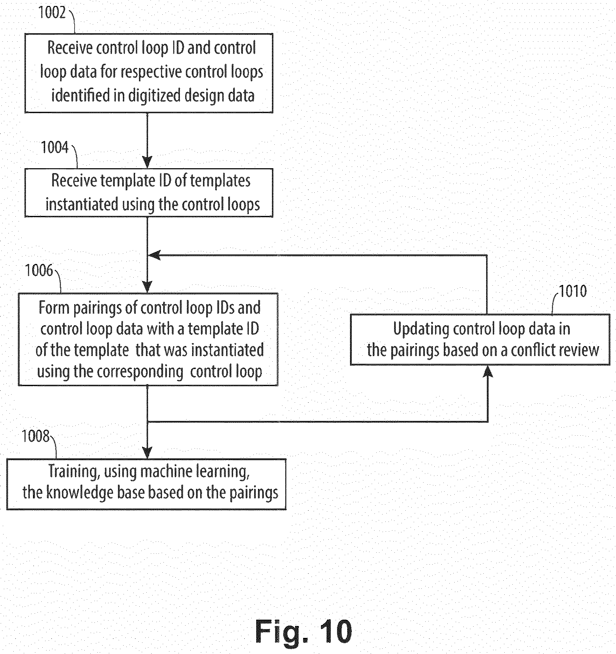

With reference to FIG. 10, an example method of training a KB is disclosed. At block 1002, a control loop ID and control loop data for respective control loops identified in digitized design data are received. At block 1004, template IDs of respective templates instantiated using corresponding control loops of the respective control loops are received.

At block 1006 pairings are formed of control loop IDs and control loop data with a template ID of the template that was instantiated using the corresponding control loop

At block 1008, the KB is trained, using machine learning, based on the pairings.

In one or more embodiments, at block 1010, the control loop data in the pairings is updated based on review data output by a conflict review. The conflict review can be performed manually and/or automatically.

The conflict review includes identifying a conflict in which control loop data for two different pairings are the same and are paired respectively with different templates and reviewing the digitized design data to identify an additional attribute of the respective first and second control loops that is different for the first control loop relative to the second control loop. The review data includes a new feature to be added to the control loop data for the first and second control loops that corresponds to the additional attribute so that the first and second control loops have different corresponding control loop data. The method further includes adding the new feature to the control loop data. The preceding aspects, features, embodiments and advantages are merely illustrative and are not considered elements or limitations of the appended claims except where explicitly recited in a claim(s).

The various embodiments disclosed herein may be implemented as a system, method or computer program product. Accordingly, aspects may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, aspects may take the form of a computer program product embodied in one or more computer-readable medium(s) having computer-readable program code embodied thereon.

Any combination of one or more computer-readable medium(s) may be utilized. The computer-readable medium may be a non-transitory computer-readable medium. A non-transitory computer-readable medium may be, for example, but not limited to, an electronic, magnetic, optical, electromagnetic, infrared, or semiconductor system, apparatus, or device, or any suitable combination of the foregoing. More specific examples (a non-exhaustive list) of the non-transitory computer-readable medium can include the following: an electrical connection having one or more wires, a portable computer diskette, a hard disk, RAM, a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. Program code embodied on a computer-readable medium may be transmitted using any appropriate medium, including but not limited to wireless, wireline, optical fiber cable, RF, etc., or any suitable combination of the foregoing.

Computer program code for carrying out operations for aspects of the present disclosure may be written in any combination of one or more programming languages. Moreover, such computer program code can execute using a single computer system or by multiple computer systems communicating with one another (e.g., using a LAN, WAN, the Internet, etc.). While various features in the preceding are described with reference to flowchart illustrations and/or block diagrams, a person of ordinary skill in the art will understand that each block of the flowchart illustrations and/or block diagrams, as well as combinations of blocks in the flowchart illustrations and/or block diagrams, can be implemented by computer logic (e.g., computer program instructions, hardware logic, a combination of the two, etc.). Generally, computer program instructions may be provided to a processor(s) of a general-purpose computer, special-purpose computer, or other programmable data processing apparatus. Moreover, the execution of such computer program instructions using the processor(s) produces a machine that can carry out a function(s) or act(s) specified in the flowchart and/or block diagram block or blocks.

Unless defined otherwise, all technical and scientific terms used herein have the same meaning as commonly understood by one of ordinary skill in the art to which this disclosure belongs. Although any methods and materials similar or equivalent to those described herein can also be used in the practice or testing of the illustrated embodiments, exemplary methods and materials are now described.

It is to be appreciated the embodiments of the disclosure include software algorithms, programs, or code that can reside on a computer useable medium having control logic for enabling execution on a machine having a computer processor. The machine typically includes memory storage configured to provide output from execution of the computer algorithm or program.

As used herein, the term "software" is meant to be synonymous with any code or program that can be in a processor of a host computer, regardless of whether the implementation is in hardware, firmware or as a software computer product available on a disc, a memory storage device, or for download from a remote machine. The embodiments described herein include such software to implement the logic, equations, relationships and algorithms described above.

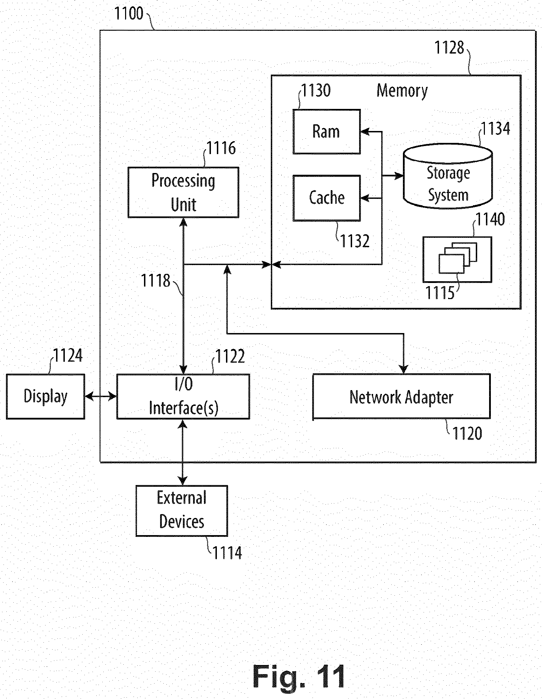

Embodiments of design system 100 may be implemented or executed by one or more computer systems. For example, design system 100 can be implemented using a computer system such as example computer system 1100 illustrated in FIG. 11. In various embodiments, computer system 1100 may be a server, a mainframe computer system, a workstation, a network computer, a desktop computer, a laptop, or the like, and/or include one or more of a field-programmable gate array (FPGA), application specific integrated circuit (ASIC), microcontroller, microprocessor, or the like.

Computer system 1100 is only one example of a suitable system and is not intended to suggest any limitation as to the scope of use or functionality of embodiments of the disclosure described herein. Regardless, computer system 1100 is capable of being implemented and/or performing any of the functionality set forth hereinabove.

Computer system 1100 may be described in the general context of computer system-executable instructions, such as program modules, being executed by a computer system. Generally, program modules may include routines, programs, objects, components, logic, data structures, and so on that perform particular tasks or implement particular abstract data types. Computer system 1100 may be practiced in distributed data processing environments where tasks are performed by remote processing devices that are linked through a communications network. In a distributed data processing environment, program modules may be located in both local and remote computer system storage media including memory storage devices.

Computer system 1100 is shown in FIG. 11 in the form of a general-purpose computing device. The components of computer system 1100 may include, but are not limited to, one or more processors or processing units 1116, a system memory 1128, and a bus 1118 that couples various system components including system memory 1128 to processor 1116.

Bus 1118 represents one or more of any of several types of bus structures, including a memory bus or memory controller, a peripheral bus, an accelerated graphics port, and a processor or local bus using any of a variety of bus architectures. By way of example, and not limitation, such architectures include Industry Standard Architecture (ISA) bus, Micro Channel Architecture (MCA) bus, Enhanced ISA (EISA) bus, Video Electronics Standards Association (VESA) local bus, and Peripheral Component Interconnect (PCI) bus.

Computer system 1100 typically includes a variety of computer system readable media. Such media may be any available media that is accessible by computer system 1100, and it includes both volatile and non-volatile media, removable and non-removable media.

System memory 1128 can include computer system readable media in the form of volatile memory, such as random-access memory (RAM) 1130 and/or cache memory 1132. Computer system 1100 may further include other removable/non-removable, volatile/non-volatile computer system storage media. By way of example only, storage system 1134 can be provided for reading from and writing to a non-removable, non-volatile magnetic media (not shown and typically called a "hard drive"). Although not shown, a magnetic disk drive for reading from and writing to a removable, non-volatile magnetic disk, and an optical disk drive for reading from or writing to a removable, non-volatile optical disk such as a CD-ROM, DVD-ROM or other optical media can be provided. In such instances, each can be connected to bus 1118 by one or more data media interfaces. As will be further depicted and described below, memory 1128 may include at least one program product having a set (e.g., at least one) of program modules that are configured to carry out the functions of embodiments of the disclosure.

Program/utility 1140, having a set (at least one) of program modules 1115, such as computer system model 120, filter 122, spatial positioning module 124, analysis module 126, and user interface 128 may be stored in memory 1128 by way of example, and not limitation, as well as an operating system, one or more application programs, other program modules, and program data. Each of the operating system, one or more application programs, other program modules, and program data or some combination thereof, may include an implementation of a networking environment. Program modules 1115 generally carry out the functions and/or methodologies of embodiments of the disclosure as described herein.

Computer system 1100 may also communicate with one or more external devices 1114 such as a keyboard, a pointing device, a display 1124, etc.; one or more devices that enable a user to interact with computer system 1100; and/or any devices (e.g., network card, modem, etc.) that enable design system 100 to communicate with one or more other computing devices. Such communication can occur via Input/Output (I/O) interfaces 1122. Still yet, computer system 1100 can communicate with one or more networks such as a LAN, a general WAN, and/or a public network (e.g., the Internet) via network adapter 1120. As depicted, network adapter 1120 communicates with the other components of a network (not shown) via bus 1118. It should be understood that although not shown, other hardware and/or software components could be used in conjunction with computer system 1100. Examples, include, but are not limited to: microcode, device drivers, redundant processing units, external disk drive arrays, RAID systems, tape drives, and data archival storage systems, and so on.

The flowchart and block diagrams in the Figures illustrate the architecture, functionality and/or operation of possible implementations of various embodiments of the present disclosure. In this regard, each block in the flowchart or block diagrams may represent a module, segment or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions.

## Claims

1. A method of automating engineering design performed by an automated engineering system, the method comprising:
querying (902) a knowledge base (104) for a template to map with new control loop data of a new control loop that was identified in new digitized design data for a new engineering project, the query including the new control loop data, wherein the knowledge base (104) is trained to map past control loop data of past control loops that were identified in past digitized design data from one or more past engineering projects to respective templates based on past instantiation of the respective templates with the past control loops by the one or more past engineering projects;
receiving (904) a selected template in response to the query, wherein the selected template is selected based on its mapping with past control loop data that matches the new control loop data;
instantiating the selected template with the new control loop data;
**characterized by**
causing a control component of an engineering system (170) to be operated using the instantiated template for controlling a physical entity including a valve or a switch;
wherein the method further comprises:
collecting, before providing to the knowledge base (104) for training, pairings of past templates and past control loops having identifiers and past control loop data as used for respective past instantiations by the respective past engineering projects;
submitting the pairings for a conflict review performed manually and/or automatically;
receiving review data based on the conflict review; and
updating the collection as a function of the conflict review data, wherein the knowledge base (104) is created and/or trained using the collection;
wherein the conflict review comprises:
identifying a conflict in which first and second control loop data for two different pairings are the same and are paired respectively with different templates;
reviewing the past digitized design data to identify an additional attribute of the respective first and second control loops that is different for the first control loop relative to the second control loop; and
including in the review data a new feature to be added to the control loop data in the collection for the first and second control loops that corresponds to the additional attribute so that the first and second control loops have different corresponding control loop data.

2. The method of claim 1, wherein the new control loop data and past control loop data are standardized and/or normalized.

3. The method of claim 1, further comprising adding the additional attribute to the control loop data of at least one of the first and second control loops.

4. The method of claim 1, further comprising:
submitting a mapping of the selected template and the new control loop data for engineering review;
receiving review data based on the engineering review; and
updating the knowledge base (104) as a function of the review data.

5. The method of claim 1, further comprising:
identifying (1002) the past control loop data in past digitized design data from a past engineering project; and
pairing (1006) the past control loop data to a past template that was instantiated by the past engineering project using a control loop that corresponds to the past control loop data.

6. The method of claim 1, wherein the new digitized design data is digitized from data including pictorial data.

7. The method of claim 1, wherein machine learning is used for training (1008) the knowledge base (104) and for responding to queries submitted to the knowledge base (104).

8. The method of claim 1, wherein the past and new control loop data include control loop type, one or more tags, and/or attributes of the one or more tags, wherein the attributes of the one or more tags include system type, signal type, signal count, signal level, alarms, and/or signal and/or equipment description.

9. The method of claim 4, wherein each mapping in the knowledge base (104) has an associated confidence score, and updating the knowledge base (104) includes increasing the confidence score when the mapping was approved by the engineering review, and decreasing the confidence score when the mapping was disapproved and/or a modification to or replacement of the selected template was suggested by the engineering review.

10. An automated engineering system comprising:
a memory (1128) configured to store instructions; and
a processor (1116) in communication with the memory (1128), wherein the processor (1116) upon execution of the instructions is configured to:
query a knowledge base (104) for a template to map with new control loop data of a new control loop that was identified in new digitized design data for a new engineering project, the query including the new control loop data, wherein the knowledge base (104) is trained to map past control loop data of past control loops that were identified in past digitized design data from one or more past engineering projects to respective templates based on past instantiation of the respective templates with the past control loops by the one or more past engineering projects;
receive a selected template in response to the query, wherein the selected template is selected based on its mapping with past control loop data that matches the new control loop data;
instantiate the selected template with the new control loop data;
**characterized by**
cause a control component of an engineering system (170) to be operated using the instantiated template for controlling a physical entity including a valve or a switch;
wherein the processor upon execution of the instructions is further configured to:
collect, before providing to the knowledge base (104) for training, pairings of past templates and past control loops having identifiers and past control loop data as used for respective past instantiations by the respective past engineering projects;
submit the pairings for a conflict review performed manually and/or automatically;
receive review data based on the conflict review; and
update the collection as a function of the conflict review data, wherein the knowledge base (104) is created and/or trained using the collection;
wherein the conflict review comprises:
identifying a conflict in which first and second control loop data for two different pairings are the same and are paired respectively with different templates;
reviewing the past digitized design data to identify an additional attribute of the respective first and second control loops that is different for the first control loop relative to the second control loop; and
including in the review data a new feature to be added to the control loop data in the collection for the first and second control loops that corresponds to the additional attribute so that the first and second control loops have different corresponding control loop data.

11. The automated engineering system of claim 10, wherein the processor upon execution of the instructions is further configured to add the additional attribute to the control loop data of at least one of the first and second control loops.

12. The automated engineering system of claim 10, wherein the processor upon execution of the instructions is further configured to:
submit a mapping of the selected template and the new control loop data for engineering review;
receive review data based on the engineering review; and
update the knowledge base (104) as a function of the review data.

13. The automated engineering system of claim 12, wherein each mapping in the knowledge base (104) has an associated confidence score, and updating the knowledge base includes increasing the confidence score when the mapping was approved by the engineering review, and decreasing the confidence score when the mapping was disapproved and/or a modification to or replacement of the selected template was suggested by the engineering review.

14. A non-transitory computer readable storage medium having one or more computer programs stored therein, the computer programs comprising instructions, which when executed by a processor of a computer system, cause the processor to:
query a knowledge base (104) for a template to map with new control loop data of a new control loop that was identified in new digitized design data for a new engineering project, the query including the new control loop data, wherein the knowledge base (104) is trained to map past control loop data of past control loops that were identified in past digitized design data from one or more past engineering projects to respective templates based on past instantiation of the respective templates with the past control loops by the one or more past engineering projects;
receive a selected template in response to the query, wherein the selected template is selected based on its mapping with past control loop data that matches the new control loop data;
instantiate the selected template with the new control loop data;
**characterized by**
cause a control component of an engineering system (170) to be operated using the instantiated template for controlling a physical entity including a valve or a switch;
wherein the instructions, when executed by the processor of the computer system, further cause the processor to:
collect, before providing to the knowledge base (104) for training, pairings of past templates and past control loops having identifiers and past control loop data as used for respective past instantiations by the respective past engineering projects;
submit the pairings for a conflict review performed manually and/or automatically;
receive review data based on the conflict review; and
update the collection as a function of the conflict review data, wherein the knowledge base (104) is created and/or trained using the collection;
wherein the conflict review comprises:
identifying a conflict in which first and second control loop data for two different pairings are the same and are paired respectively with different templates;
reviewing the past digitized design data to identify an additional attribute of the respective first and second control loops that is different for the first control loop relative to the second control loop; and
including in the review data a new feature to be added to the control loop data in the collection for the first and second control loops that corresponds to the additional attribute so that the first and second control loops have different corresponding control loop data.

## Patentansprüche

1. Verfahren zum Automatisieren von Engineering-Design, das durch ein automatisiertes Engineering-System durchgeführt wird, wobei das Verfahren umfasst:
Abfragen (902) einer Wissensbasis (104) nach einer Vorlage zum Abbilden auf neue Steuerschleifendaten einer neuen Steuerschleife, die in neuen digitalisierten Designdaten für ein neues Engineering-Projekt identifiziert wurde, wobei die Abfrage die neuen Steuerschleifendaten umfasst, wobei die Wissensbasis (104) trainiert ist, um vergangene Steuerschleifendaten vergangener Steuerschleifen, die in vergangenen digitalisierten Designdaten von einem oder mehreren vergangenen Engineering-Projekten identifiziert wurden, auf jeweilige Vorlagen abzubilden, basierend auf vergangener Instanziierung der jeweiligen Vorlagen mit den vergangenen Steuerschleifen durch das eine oder die mehreren vergangenen Engineering-Projekte;
Empfangen (904) einer ausgewählten Vorlage als Reaktion auf die Abfrage, wobei die ausgewählte Vorlage basierend auf ihrer Abbildung auf vergangene Steuerschleifendaten ausgewählt wird, die mit den neuen Steuerschleifendaten übereinstimmen;
Instanziieren der ausgewählten Vorlage mit den neuen Steuerschleifendaten;
**gekennzeichnet durch**
Veranlassen, dass eine Steuerkomponente eines Engineering-Systems (170) unter Verwendung der instanziierten Vorlage zum Steuern einer physikalischen Entität, die ein Ventil oder einen Schalter umfasst, betrieben wird;
wobei das Verfahren ferner umfasst:
Sammeln, vor dem Bereitstellen an die Wissensbasis (104) zum Trainieren, von Paarungen vergangener Vorlagen und vergangener Steuerschleifen mit Kennungen und vergangenen Steuerschleifendaten, wie sie für jeweilige vergangene Instanziierungen durch die jeweiligen vergangenen Engineering-Projekte verwendet wurden;
Einreichen der Paarungen für eine Konfliktüberprüfung, die manuell und/oder automatisch durchgeführt wird;
Empfangen von Überprüfungsdaten basierend auf der Konfliktüberprüfung; und
Aktualisieren der Sammlung als eine Funktion der Konfliktüberprüfungsdaten, wobei die Wissensbasis (104) unter Verwendung der Sammlung erstellt und/oder trainiert wird;
wobei die Konfliktüberprüfung umfasst:
Identifizieren eines Konflikts, in dem erste und zweite Steuerschleifendaten für zwei verschiedene Paarungen gleich sind und jeweils mit verschiedenen Vorlagen gepaart sind;
Überprüfen der vergangenen digitalisierten Designdaten, um ein zusätzliches Attribut der jeweiligen ersten und zweiten Steuerschleife zu identifizieren, das für die erste Steuerschleife in Bezug auf die zweite Steuerschleife verschieden ist; und
Einschließen in die Überprüfungsdaten eines neuen Merkmals, das zu den Steuerschleifendaten in der Sammlung für die erste und zweite Steuerschleife hinzuzufügen ist, das dem zusätzlichen Attribut entspricht, so dass die erste und zweite Steuerschleife verschiedene entsprechende Steuerschleifendaten aufweisen.

2. Verfahren nach Anspruch 1, wobei die neuen Steuerschleifendaten und vergangenen Steuerschleifendaten standardisiert und/oder normalisiert sind.

3. Verfahren nach Anspruch 1, ferner umfassend das Hinzufügen des zusätzlichen Attributs zu den Steuerschleifendaten von mindestens einer der ersten und zweiten Steuerschleifen.

4. Verfahren nach Anspruch 1, ferner umfassend:
Einreichen einer Abbildung der ausgewählten Vorlage und der neuen Steuerschleifendaten für Engineering-Überprüfung;
Empfangen von Überprüfungsdaten basierend auf der Engineering-Überprüfung; und
Aktualisieren der Wissensbasis (104) als eine Funktion der Überprüfungsdaten.

5. Verfahren nach Anspruch 1, ferner umfassend:
Identifizieren (1002) der vergangenen Steuerschleifendaten in vergangenen digitalisierten Designdaten von einem vergangenen Engineering-Projekt; und
Paaren (1006) der vergangenen Steuerschleifendaten mit einer vergangenen Vorlage, die durch das vergangene Engineering-Projekt unter Verwendung einer Steuerschleife, die den vergangenen Steuerschleifendaten entspricht, instanziiert wurde.

6. Verfahren nach Anspruch 1, wobei die neuen digitalisierten Designdaten aus Daten einschließlich Bilddaten digitalisiert werden.

7. Verfahren nach Anspruch 1, wobei maschinelles Lernen zum Trainieren (1008) der Wissensbasis (104) und zum Antworten auf Abfragen, die an die Wissensbasis (104) übermittelt werden, verwendet wird.

8. Verfahren nach Anspruch 1, wobei die vergangenen und neuen Steuerschleifendaten einen Steuerschleifentyp, ein oder mehrere Tags und/oder Attribute des einen oder der mehreren Tags einschließen, wobei die Attribute des einen oder der mehreren Tags Systemtyp, Signaltyp, Signalzählung, Signalpegel, Alarme und/oder Signal- und/oder Gerätebeschreibung einschließen.

9. Verfahren nach Anspruch 4, wobei jede Abbildung in der Wissensbasis (104) einen zugehörigen Vertrauenswert aufweist und das Aktualisieren der Wissensbasis (104) ein Erhöhen des Vertrauenswerts, wenn die Abbildung durch die Engineering-Überprüfung genehmigt wurde, und ein Verringern des Vertrauenswerts, wenn die Abbildung nicht genehmigt wurde und/oder eine Modifikation oder Ersetzung der ausgewählten Vorlage durch die Engineering-Überprüfung vorgeschlagen wurde, einschließt.

10. Automatisiertes Engineering-System, umfassend:
einen Speicher (1128), der konfiguriert ist, Anweisungen zu speichern; und
einen Prozessor (1116) in Kommunikation mit dem Speicher (1128), wobei der Prozessor (1116) bei Ausführung der Anweisungen konfiguriert ist zum:
Abfragen einer Wissensbasis (104) nach einer Vorlage zum Abbilden auf neue Steuerschleifendaten einer neuen Steuerschleife, die in neuen digitalisierten Designdaten für ein neues Engineering-Projekt identifiziert wurde, wobei die Abfrage die neuen Steuerschleifendaten umfasst, wobei die Wissensbasis (104) trainiert ist, um vergangene Steuerschleifendaten vergangener Steuerschleifen, die in vergangenen digitalisierten Designdaten von einem oder mehreren vergangenen Engineering-Projekten identifiziert wurden, auf jeweilige Vorlagen abzubilden, basierend auf vergangener Instanziierung der jeweiligen Vorlagen mit den vergangenen Steuerschleifen durch das eine oder die mehreren vergangenen Engineering-Projekte;
Empfangen einer ausgewählten Vorlage als Reaktion auf die Abfrage, wobei die ausgewählte Vorlage basierend auf ihrer Abbildung auf vergangene Steuerschleifendaten ausgewählt wird, die mit den neuen Steuerschleifendaten übereinstimmen;
Instanziieren der ausgewählten Vorlage mit den neuen Steuerschleifendaten;
**gekennzeichnet durch**
Veranlassen, dass eine Steuerkomponente eines Engineering-Systems (170) unter Verwendung der instanziierten Vorlage zum Steuern einer physikalischen Entität, die ein Ventil oder einen Schalter umfasst, betrieben wird;
wobei der Prozessor bei Ausführung der Anweisungen ferner konfiguriert ist zum:
Sammeln, vor dem Bereitstellen an die Wissensbasis (104) zum Trainieren, von Paarungen vergangener Vorlagen und vergangener Steuerschleifen mit Kennungen und vergangenen Steuerschleifendaten, wie sie für jeweilige vergangene Instanziierungen durch die jeweiligen vergangenen Engineering-Projekte verwendet wurden;
Einreichen der Paarungen für eine Konfliktüberprüfung, die manuell und/oder automatisch durchgeführt wird;
Empfangen von Überprüfungsdaten basierend auf der Konfliktüberprüfung; und
Aktualisieren der Sammlung als eine Funktion der Konfliktüberprüfungsdaten, wobei die Wissensbasis (104) unter Verwendung der Sammlung erstellt und/oder trainiert wird;
wobei die Konfliktüberprüfung umfasst:
Identifizieren eines Konflikts, in dem erste und zweite Steuerschleifendaten für zwei verschiedene Paarungen gleich sind und jeweils mit verschiedenen Vorlagen gepaart sind;
Überprüfen der vergangenen digitalisierten Designdaten, um ein zusätzliches Attribut der jeweiligen ersten und zweiten Steuerschleife zu identifizieren, das für die erste Steuerschleife in Bezug auf die zweite Steuerschleife verschieden ist; und
Einschließen in die Überprüfungsdaten eines neuen Merkmals, das zu den Steuerschleifendaten in der Sammlung für die erste und zweite Steuerschleife hinzuzufügen ist, das dem zusätzlichen Attribut entspricht, so dass die erste und zweite Steuerschleife verschiedene entsprechende Steuerschleifendaten aufweisen.

11. Automatisiertes Engineering-System nach Anspruch 10, wobei der Prozessor bei Ausführung der Anweisungen ferner konfiguriert ist, das zusätzliche Attribut zu den Steuerschleifendaten von mindestens einer der ersten und zweiten Steuerschleifen hinzuzufügen.

12. Automatisiertes Engineering-System nach Anspruch 10, wobei der Prozessor bei Ausführung der Anweisungen ferner konfiguriert ist zum:
Einreichen einer Abbildung der ausgewählten Vorlage und der neuen Steuerschleifendaten für eine Engineering-Überprüfung;
Empfangen von Überprüfungsdaten basierend auf der Engineering-Überprüfung; und
Aktualisieren der Wissensbasis (104) als eine Funktion der Überprüfungsdaten.

13. Automatisiertes Engineering-System nach Anspruch 12, wobei jede Abbildung in der Wissensbasis (104) einen zugehörigen Vertrauenswert aufweist und das Aktualisieren der Wissensbasis (104) ein Erhöhen des Vertrauenswerts umfasst, wenn die Abbildung durch die Engineering-Überprüfung genehmigt wurde und/oder und ein Verringern des Vertrauenswerts umfasst, wenn die Abbildung nicht genehmigt wurde und/oder eine Modifikation oder Ersetzung der ausgewählten Vorlage durch die Engineering-Überprüfung vorgeschlagen wurde, einschließt.

14. Nichtflüchtiges computerlesbares Speichermedium mit einem oder mehreren darin gespeicherten Computerprogrammen, wobei die Computerprogramme Anweisungen umfassen, die bei Ausführung durch einen Prozessor eines Computersystems den Prozessor veranlassen zum:
Abfragen einer Wissensbasis (104) nach einer Vorlage zum Abbilden auf neue Steuerschleifendaten einer neuen Steuerschleife, die in neuen digitalisierten Designdaten für ein neues Engineering-Projekt identifiziert wurde, wobei die Abfrage die neuen Steuerschleifendaten umfasst, wobei die Wissensbasis (104) trainiert ist, um vergangene Steuerschleifendaten vergangener Steuerschleifen, die in vergangenen digitalisierten Designdaten von einem oder mehreren vergangenen Engineering-Projekten identifiziert wurden, auf jeweilige Vorlagen abzubilden, basierend auf vergangener Instanziierung der jeweiligen Vorlagen mit den vergangenen Steuerschleifen durch das eine oder die mehreren vergangenen Engineering-Projekte;
Empfangen einer ausgewählten Vorlage als Reaktion auf die Abfrage, wobei die ausgewählte Vorlage basierend auf ihrer Abbildung auf vergangene Steuerschleifendaten ausgewählt wird, die mit den neuen Steuerschleifendaten übereinstimmen;
Instanziieren der ausgewählten Vorlage mit den neuen Steuerschleifendaten;
**gekennzeichnet durch**
Veranlassen, dass eine Steuerkomponente eines Engineering-Systems (170) unter Verwendung der instanziierten Vorlage zum Steuern einer physikalischen Entität, die ein Ventil oder einen Schalter umfasst, betrieben wird;
wobei die Anweisungen bei Ausführung durch den Prozessor des Computersystems den Prozessor ferner veranlassen zum:
Sammeln, vor dem Bereitstellen an die Wissensbasis (104) zum Trainieren, von Paarungen vergangener Vorlagen und vergangener Steuerschleifen mit Kennungen und vergangenen Steuerschleifendaten, wie sie für jeweilige vergangene Instanziierungen durch die jeweiligen vergangenen Engineering-Projekte verwendet wurden;
Einreichen der Paarungen für eine Konfliktüberprüfung, die manuell und/oder automatisch durchgeführt wird;
Empfangen von Überprüfungsdaten basierend auf der Konfliktüberprüfung; und
Aktualisieren der Sammlung als eine Funktion der Konfliktüberprüfungsdaten, wobei die Wissensbasis (104) unter Verwendung der Sammlung erstellt und/oder trainiert wird;
wobei die Konfliktüberprüfung umfasst:
Identifizieren eines Konflikts, in dem erste und zweite Steuerschleifendaten für zwei verschiedene Paarungen gleich sind und jeweils mit verschiedenen Vorlagen gepaart sind;
Überprüfen der vergangenen digitalisierten Designdaten, um ein zusätzliches Attribut der jeweiligen ersten und zweiten Steuerschleife zu identifizieren, das für die erste Steuerschleife in Bezug auf die zweite Steuerschleife verschieden ist; und
Einschließen in die Überprüfungsdaten eines neuen Merkmals, das zu den Steuerschleifendaten in der Sammlung für die erste und zweite Steuerschleife hinzuzufügen ist, das dem zusätzlichen Attribut entspricht, so dass die erste und zweite Steuerschleife verschiedene entsprechende Steuerschleifendaten aufweisen.

## Revendications

1. Procédé d'automatisation de la conception technique effectué par un système d'ingénierie automatisé, le procédé consistant à :
interroger (902) une base de connaissances (104) afin de trouver un modèle à mapper à de nouvelles données de boucle de commande d'une nouvelle boucle de commande qui a été identifiée dans de nouvelles données de conception numérisées pour un nouveau projet d'ingénierie, l'interrogation incluant les nouvelles données de boucle de commande, dans lequel la base de connaissances (104) est entraînée pour mapper des données de boucles de commande antérieures de boucles de commande antérieures qui ont été identifiées dans des données de conception numérisées antérieures issues d'un ou plusieurs projets d'ingénierie antérieurs à des modèles respectifs sur la base d'une instanciation antérieure des modèles respectifs avec les boucles de commande antérieures par lesdits un ou plusieurs projets d'ingénierie antérieurs ;
recevoir (904) un modèle sélectionné en réponse à l'interrogation, dans lequel le modèle sélectionné est choisi sur la base de son mappage avec des données de boucles de commande antérieures qui correspondent aux nouvelles données de boucle de commande ;
instancier le modèle sélectionné avec les nouvelles données de boucle de commande ;
**caractérisé par** le fait
de faire fonctionner un composant de commande d'un système d'ingénierie (170) à l'aide du modèle instancié pour commander une entité physique incluant une vanne ou un commutateur ;
dans lequel le procédé consiste en outre à :
collecter, avant de les fournir à la base de connaissances (104) à des fins d'entraînement, des appariements de modèles antérieurs et de boucles de commande antérieures comportant des identifiants et des données de boucles de commande antérieures telles qu'utilisées pour des instanciations antérieures respectives par les projets d'ingénierie antérieurs respectifs ;
soumettre les appariements à une revue de conflits effectuée manuellement et/ou automatiquement ;
recevoir des données de revue basées sur la revue de conflits ; et
mettre à jour la collection en fonction des données de revue de conflits, dans lequel la base de connaissances (104) est créée et/ou entraînée à l'aide de la collection ;
dans lequel la revue de conflits consiste à :
identifier un conflit dans lequel des premières et deuxièmes données de boucle de commande pour deux appariements différents sont identiques et sont respectivement appariées à des modèles différents ;
passer en revue les données de conception numérisées antérieures afin d'identifier un attribut supplémentaire des première et deuxième boucles de commande respectives qui est différent pour la première boucle de commande par rapport à la deuxième boucle de commande ; et
inclure dans les données de revue une nouvelle caractéristique à ajouter aux données de boucle de commande dans la collection pour les première et deuxième boucles de commande, qui correspond à l'attribut supplémentaire, de sorte que les première et deuxième boucles de commande aient des données de boucle de commande correspondantes différentes.

2. Procédé selon la revendication 1, dans lequel les nouvelles données de boucle de commande et les données de boucle de commande antérieures sont standardisées et/ou normalisées.

3. Procédé selon la revendication 1, consistant en outre à ajouter l'attribut supplémentaire aux données de boucle de commande d'au moins l'une des première et deuxième boucles de commande.

4. Procédé selon la revendication 1, consistant en outre à :
soumettre un mappage du modèle sélectionné et des nouvelles données de boucle de commande à une revue d'ingénierie ;
recevoir des données de revue basées sur la revue d'ingénierie ; et
mettre à jour la base de connaissances (104) en fonction des données de revue.

5. Procédé selon la revendication 1, consistant en outre à :
identifier (1002) les données de boucle de commande antérieures dans des données de conception numérisées antérieures issues d'un projet d'ingénierie antérieur ; et
apparier (1006) les données de boucle de commande antérieures à un modèle antérieur qui a été instancié par le projet d'ingénierie antérieur à l'aide d'une boucle de commande qui correspond aux données de boucle de commande antérieures.

6. Procédé selon la revendication 1, dans lequel les nouvelles données de conception numérisées sont numérisées à partir de données incluant des données picturales.

7. Procédé selon la revendication 1, dans lequel l'apprentissage automatique est utilisé pour entraîner (1008) la base de connaissances (104) et pour répondre aux interrogations soumises à la base de connaissances (104).

8. Procédé selon la revendication 1, dans lequel les données de boucle de commande antérieures et nouvelles incluent le type de boucle de commande, une ou plusieurs balises et/ou des attributs desdites une ou plusieurs balises, dans lequel les attributs desdites une ou plusieurs balises incluent le type de système, le type de signal, le nombre de signaux, le niveau de signal, des alarmes et/ou une description du signal et/ou de l'équipement.

9. Procédé selon la revendication 4, dans lequel chaque mappage dans la base de connaissances (104) est associé à un score de confiance, et la mise à jour de la base de connaissances (104) inclut le fait d'augmenter le score de confiance lorsque le mappage a été approuvé par la revue d'ingénierie, et de diminuer le score de confiance lorsque le mappage a été désapprouvé et/ou qu'une modification ou un remplacement du modèle sélectionné a été suggéré par la revue d'ingénierie.

10. Système d'ingénierie automatisé comprenant :
une mémoire (1128) configurée pour stocker des instructions ; et
un processeur (1116) en communication avec la mémoire (1128), dans lequel le processeur (1116), lors de l'exécution des instructions, est configuré pour :
interroger une base de connaissances (104) afin de trouver un modèle à mapper à de nouvelles données de boucle de commande d'une nouvelle boucle de commande qui a été identifiée dans de nouvelles données de conception numérisées pour un nouveau projet d'ingénierie, l'interrogation incluant les nouvelles données de boucle de commande, dans lequel la base de connaissances (104) est entraînée pour mapper des données de boucles de commande antérieures de boucles de commande antérieures qui ont été identifiées dans des données de conception numérisées antérieures issues d'un ou plusieurs projets d'ingénierie antérieurs à des modèles respectifs sur la base d'une instanciation antérieure des modèles respectifs avec les boucles de commande antérieures par lesdits un ou plusieurs projets d'ingénierie antérieurs ;
recevoir un modèle sélectionné en réponse à l'interrogation, dans lequel le modèle sélectionné est choisi sur la base de son mappage avec des données de boucles de commande antérieures qui correspondent aux nouvelles données de boucle de commande ;
instancier le modèle sélectionné avec les nouvelles données de boucle de commande ;
**caractérisé par** le fait
de faire fonctionner un composant de commande d'un système d'ingénierie (170) à l'aide du modèle instancié pour commander une entité physique incluant une vanne ou un commutateur ;
dans lequel le processeur, lors de l'exécution des instructions, est en outre configuré pour :
collecter, avant de les fournir à la base de connaissances (104) à des fins d'entraînement, des appariements de modèles antérieurs et de boucles de commande antérieures comportant des identifiants et des données de boucles de commande antérieures telles qu'utilisées pour des instanciations antérieures respectives par les projets d'ingénierie antérieurs respectifs ;
soumettre les appariements à une revue de conflits effectuée manuellement et/ou automatiquement ;
recevoir des données de revue basées sur la revue de conflits ; et
mettre à jour la collection en fonction des données de revue de conflits, dans lequel la base de connaissances (104) est créée et/ou entraînée à l'aide de la collection ;
dans lequel la revue de conflits consiste à :
identifier un conflit dans lequel des premières et deuxièmes données de boucle de commande pour deux appariements différents sont identiques et sont respectivement appariées à des modèles différents ;
passer en revue les données de conception numérisées antérieures afin d'identifier un attribut supplémentaire des première et deuxième boucles de commande respectives qui est différent pour la première boucle de commande par rapport à la deuxième boucle de commande ; et
inclure dans les données de revue une nouvelle caractéristique à ajouter aux données de boucle de commande dans la collection pour les première et deuxième boucles de commande, qui correspond à l'attribut supplémentaire, de sorte que les première et deuxième boucles de commande aient des données de boucle de commande correspondantes différentes.

11. Système d'ingénierie automatisé selon la revendication 10, dans lequel le processeur, lors de l'exécution des instructions, est en outre configuré pour ajouter l'attribut supplémentaire aux données de boucle de commande d'au moins l'une des première et deuxième boucles de commande.

12. Système d'ingénierie automatisé selon la revendication 10, dans lequel le processeur, lors de l'exécution des instructions, est en outre configuré pour :
soumettre un mappage du modèle sélectionné et des nouvelles données de boucle de commande à une revue d'ingénierie ;
recevoir des données de revue basées sur la revue d'ingénierie ; et
mettre à jour la base de connaissances (104) en fonction des données de revue.

13. Système d'ingénierie automatisé selon la revendication 12, dans lequel chaque mappage dans la base de connaissances (104) est associé à un score de confiance, et la mise à jour de la base de connaissances inclut le fait d'augmenter le score de confiance lorsque le mappage a été approuvé par la revue d'ingénierie, et de diminuer le score de confiance lorsque le mappage a été désapprouvé et/ou qu'une modification ou un remplacement du modèle sélectionné a été suggéré par la revue d'ingénierie.

14. Support de stockage non transitoire lisible par ordinateur, sur lequel sont stockés un ou plusieurs programmes informatiques, lesdits programmes informatiques comprenant des instructions qui, lorsqu'elles sont exécutées par un processeur d'un système informatique, amènent le processeur à :
interroger une base de connaissances (104) afin de trouver un modèle à mapper à de nouvelles données de boucle de commande d'une nouvelle boucle de commande qui a été identifiée dans de nouvelles données de conception numérisées pour un nouveau projet d'ingénierie, l'interrogation incluant les nouvelles données de boucle de commande, dans lequel la base de connaissances (104) est entraînée pour mapper des données de boucles de commande antérieures de boucles de commande antérieures qui ont été identifiées dans des données de conception numérisées antérieures issues d'un ou plusieurs projets d'ingénierie antérieurs à des modèles respectifs sur la base d'une instanciation antérieure des modèles respectifs avec les boucles de commande antérieures par lesdits un ou plusieurs projets d'ingénierie antérieurs ;
recevoir un modèle sélectionné en réponse à l'interrogation, dans lequel le modèle sélectionné est choisi sur la base de son mappage avec des données de boucles de commande antérieures qui correspondent aux nouvelles données de boucle de commande ;
instancier le modèle sélectionné avec les nouvelles données de boucle de commande ;
**caractérisé par** le fait
de faire fonctionner un composant de commande d'un système d'ingénierie (170) à l'aide du modèle instancié pour commander une entité physique incluant une vanne ou un commutateur ;
dans lequel les instructions, lorsqu'elles sont exécutées par le processeur du système informatique, amènent en outre le processeur à :
collecter, avant de les fournir à la base de connaissances (104) à des fins d'entraînement, des appariements de modèles antérieurs et de boucles de commande antérieures comportant des identifiants et des données de boucles de commande antérieures telles qu'utilisées pour des instanciations antérieures respectives par les projets d'ingénierie antérieurs respectifs ;
soumettre les appariements à une revue de conflits effectuée manuellement et/ou automatiquement ;
recevoir des données de revue basées sur la revue de conflits ; et
mettre à jour la collection en fonction des données de revue de conflits, dans lequel la base de connaissances (104) est créée et/ou entraînée à l'aide de la collection ;
dans lequel la revue de conflits consiste à :
identifier un conflit dans lequel des premières et deuxièmes données de boucle de commande pour deux appariements différents sont identiques et sont respectivement appariées à des modèles différents ;
passer en revue les données de conception numérisées antérieures afin d'identifier un attribut supplémentaire des première et deuxième boucles de commande respectives qui est différent pour la première boucle de commande par rapport à la deuxième boucle de commande ; et
inclure dans les données de revue une nouvelle caractéristique à ajouter aux données de boucle de commande dans la collection pour les première et deuxième boucles de commande, qui correspond à l'attribut supplémentaire, de sorte que les première et deuxième boucles de commande aient des données de boucle de commande correspondantes différentes.
